# EUROPÄISCHE PATENTANMELDUNG

(11) **EP 1 850 276 A1**
(43) Veröffentlichungstag der Anmeldung: **31.10.2007**
(21) Anmeldenummer: 07008427.2
(22) Anmeldetag: 25.04.2007
(51) Int. Cl.: G06K 19/077

(54) **In-mould Etikett**

(30) Priorität: 25.04.2006 DE 102006019564; 09.10.2006 DE 102006047714
(71) Anmelder: ID-SYSTEC GMBH, 24539 Neumünster (DE)
(72) Erfinder: Schnoor, Ulrich, 24576 Bad Bramstedt (DE); Lagemann, Lutz, 25451 Quickborn (DE)
(74) Vertreter: UEXKÜLL & STOLBERG

(57) **Zusammenfassung**

Ein In-Mould-Etikett (1) hat eine Basis (2) mit einer Vorderseite und einer Rückseite (10). Auf die Rückseite (10) der Basis (2) ist eine Antenne (16) aus Draht aufgebracht, die elektrisch leitend mit einem RFID-Chip (12) verbunden ist. Das In-Mould-Etikett (1) lässt sich z.B. als Informationsträger für einen Spritzguss-Transportbehälter aus Kunststoff verwenden.

## Beschreibung

Die Erfindung betrifft ein In-Mould-Etikett, ein Verfahren zum Herstellen eines derartigen In-Mould-Etiketts sowie die Verwendung des In-Mould-Etiketts bei einem Transportbehälter.

Traditionell werden Kunststoffbehälter, die z.B. zum Transportieren oder Lagern von Produkten bei der Produktion dienen, durch einen zusätzlichen Druckprozess oder durch nachträgliches Aufbringen von selbstklebenden Etiketten dekoriert, mit Informationen versehen oder gekennzeichnet.

Die Verwendung von In-Mould-Etiketten ermöglicht eine höhere Qualität der dekorativen Bedruckung und eine individuelle, fortlaufende Beschriftung mit maschinenlesbaren Barcodes.

Vorbekannte In-Mould-Etiketten haben eine folienartige Basis aus einem Polyolefinpolymer, z.B. einem Polyethylen/Polypropylen-Copolymerisat mit einer Silikatfüllung, und lassen sich in hoher Auflösung und mehrfarbig bedrucken, vorzugsweise bevor sie auf Kontur gestanzt werden. Die Oberfläche kann mit einer Beschichtung vor mechanischer Einwirkung und vor UV-Strahlung geschützt werden. In einem Spritzguss-Herstellungsprozess, z.B. für einen Transportbehälter aus einem spritzgussfähigen Kunststoff wie z.B. Polypropylen oder Polyethylen, werden die In-Mould-Etiketten in die jeweilige Spritzgussform eingelegt, sodass die beschriftete Vorderseite nach außen exponiert ist. Die In-Mould-Etiketten haften dort entweder durch elektrostatische Aufladung oder durch Anwendung von Unterdruck. Durch das Einspritzen des flüssigen Kunststoffs in die Form wird das In-Mould-Etikett in der Oberfläche des Spritzgussteils nahtlos eingebettet, wobei die Rückseite des In-Mould-Etiketts mit Kunststoff hinterfüllt wird, sodass sie nach dem Herauslösen des Spritzgussteils aus der Form nicht mehr sichtbar ist.

Im Gegensatz zu nachträglich aufgebrachten Selbstklebeetiketten bieten In-Mould-Etiketten an den Rändern keine Absätze oder Stufen und somit keine Angriffsfläche. Dies sieht ansprechend aus und erleichtert die Reinigung. Da die In-Mould-Etiketten je nach Auswahl des Werkstoffs mit dem Kunststoff des Spritzgussteils eine feste Verbindung eingehen, ist das Entfernen oder Umkleben auf andere Teile nicht mehr möglich.

Die auf der Vorderseite eines herkömmlichen In-Mould-Etiketts z.B. mittels eines Barcodes gespeicherte Information kann dazu benutzt werden, dem mit dem In-Mould-Etikett gekennzeichneten Produkt, z.B. einem in der Produktion verwendeten Transportbehälter, weitere Information zuzuordnen. Dies geschieht z.B. mit Hilfe eines externen Rechners, in dem die Barcode-Information als Adresse einem Datenfeld zugeordnet wird.

Eine flexible Zuordnung von Information zu einem Gegenstand ist mit Hilfe der RFID-Technik möglich (Radiofrequenz-Identifikation). Dabei werden mit Hilfe geeigneter Dateneingabe- und -auslesegeräte Informationen in einen mit dem Gegenstand verbundenem Halbleiterbaustein (Chip) eingegeben bzw. ausgelesen. Der RFID-Chip ist mit einer Antenne für die Weiterleitung der Datensignale verbunden und benötigt keine eigene Spannungsversorgung. Die zu seiner Funktion erforderliche Energie wird also ebenfalls über die Antenne übertragen. Derzeitige RFID-Chips können z.B. 5 kByte an Information speichern, werden z.B. bei 900 MHz betrieben und sind z.B. 100 000 mal überschreibbar. Eine typische Reichweite für den Einsatz der Schreib- und Lesegeräte beträgt z.B. 10 m.

Die Antenne herkömmlicher RFID-Chips hat in der Regel die Form einer Schlaufe oder einer Spule mit einer Anzahl von Windungen, um auf Änderungen des magnetischen Flusses zu reagieren. Derartige Antennen können durch Ätzen aus einer leitfähigen Schicht (z.B. aus Kupfer), die auf ein Substrat aufgebracht ist, oder durch ein Siebdruckverfahren mit einer leitfähigen Druckfarbe hergestellt werden. Eine solche Antenne wird dann mit den von einem RFID-Chip ausgehenden Anschlüssen durch Kleben mit elektrisch leitfähigem Klebstoff oder durch Ancrimpen verbunden. Die Antenne und der RFID-Chip befinden sich auf einer gemeinsamen Trägerfolie, z.B. aus Polyester. Derartige Anordnungen sind allerdings nicht besonders robust. Insbesondere bei Stoßbelastungen kommt es relativ leicht zu Unterbrechungen an der Antenne oder an den Anschlüssen zwischen der Antenne und dem RFID-Chip.

Eine erheblich höhere Belastbarkeit lässt sich mit einer Antenne aus Draht erzielen, der vorzugsweise mit Isolierlack beschichtet und an den Anschlüssen eines RFID-Chips angelötet ist. Eine derartige Anordnung wird zum Schutz zwischen zwei Lagen aus Kunststofffolie, z.B. aus Polyethylen, eingebracht, was zu einer recht großen Baudicke führt.

Es ist Aufgabe der Erfindung, die Anwendungsmöglichkeiten für In-Mould-Etiketten zu erweitern.

Diese Aufgabe wird gelöst durch ein In-Mould-Etikett mit den Merkmalen des Anspruchs 1. Der Anspruch 15 betrifft ein Verfahren zum Herstellen eines derartigen In-Mould-Etiketts und der Anspruch 21 die Verwendung eines derartigen In-Mould-Etiketts als Informationsträger für einen Spritzguss-Transportbehälter. Vorteilhafte Ausgestaltungen der Erfindung ergeben sich aus den Unteransprüchen.

Das erfindungsgemäße In-Mould-Etikett hat eine Basis, die eine Vorderseite und eine Rückseite aufweist. Auf die Rückseite der Basis ist eine Antenne aus Draht aufgebracht, die elektrisch leitend mit einem RFID-Chip verbunden ist.

Die Vorteile des erfindungsgemäßen In-Mould-Etiketts zeigen sich z.B. bei der Verwendung als Informationsträger für einen Spritzguss-Transportbehälter aus Kunststoff. Bei der Herstellung eines solchen Transportbehälters kann das In-Mould-Etikett mit nach außen exponierter Vorderseite der Basis in eine Gussform für den Transportbehälter eingesetzt werden. Beim anschließenden Spritzgießen des Transportbehälters wird die Rückseite der Basis mit Antenne und RFID-Chip mit Kunststoff hinterfüllt.

Wenn das In-Mould-Etikett an einem Spritzgussteil angeordnet ist, sind also die Antenne und der RFID-Chip durch das Material des Spritzgussteils überdeckt und somit sicher geschützt. In diesem Zustand hat das erfindungsgemäße In-Mould-Etikett alle Vorteile der herkömmlichen In-Mould-Etiketten und bietet außerdem die Möglichkeit einer flexiblen Datenzuordnung und Logistik mit Hilfe der RFID-Technik. Da die Antenne aus Draht besteht, der vorzugsweise mit einem Isolierlack versehen ist, ist sie robust und starken Belastungen gewachsen, wie sie z.B. bei Stößen von Transportbehältern auftreten. Die Basis des In-Mould-Etiketts dient als Träger für die Antenne und den RFID-Chip. Eine rückseitige Abdeckung ist nicht erforderlich, da das In-Mould-Etikett in ein Kunststoffteil eingegossen wird, wie erläutert.

Es gibt verschiedene Möglichkeiten, die Antenne auf die Rückseite der Basis aufzubringen. Besonders vorteilhaft ist es, die Antenne auf die Rückseite der Basis aufzuschmelzen, z.B. indem das Material der Basis durch Ultraschall oder durch direkte Zuführung von Wärme erwärmt wird. Es ist auch denkbar, die Antenne aufzukleben oder z.B. in eine dickere Basis in eine Vertiefung formschlüssig einzulegen. Der RFID-Chip kann auf ähnliche Weise an der Rückseite der Basis angebracht werden. Da der RFID-Chip mit der Antenne verbunden ist, muss er aber nicht gesondert an der Basis befestigt sein. Grundsätzlich müssen die Antenne bzw. der RFID-Chip nur so fest an der Rückseite der Basis anhaften, wie es für die Handhabung und Verarbeitung des In-Mould-Etiketts erforderlich ist, da nach dem Eingießen des In-Mould-Etiketts in ein Spritzgussteil eine sichere Befestigung durch das Material des Spritzgussteils gewährleistet ist.

Die Antenne ist vorzugsweise an den Anschlüssen des RFID-Chips angelötet, was eine elektrisch und mechanisch sichere Verbindung gewährleistet. Andere Möglichkeiten sind Ancrimpen und die Anwendung von Wickeltechniken.

Die Antenne kann praktisch jede in der RFID-Technik übliche Bauform haben und z.B. als Schlaufe mit einer Windung oder bevorzugt als Spule mit mehreren Windungen gestaltet sein. Denkbar sind auch Dipolantennen, z.B. für den Empfang von elektrischen Feldern.

Die Basis ist vorzugsweise als Platte oder als Folie gestaltet und sollte groß genug sein, um die Antenne aufzunehmen. Als Material für die Basis kommen insbesondere die Materialien herkömmlicher In-Mould-Etiketten in Frage, z.B. Polyolefine wie z.B. Polyethylen/Polypropylen-Copolymerisate, die auch Zusatzstoffe wie z.B. Silikatfüller enthalten können.

Vorzugsweise ist die Basis an der Vorderseite mit optisch lesbarer Information versehen, z.B. mit einem Barcode. Dabei ist es vorteilhaft, wenn zumindest ein Teil der Information an der Vorderseite der Basis in dem RFID-Chip gespeichert ist. Dann lässt sich mit Hilfe der RFID-Technik die Barcode-Information auch aus größerer Entfernung auslesen.

Die Vorderseite der Basis kann, wie bei herkömmlichen In-Mould-Etiketten, mit einer Schutzschicht versehen sein, die vorzugsweise über optisch lesbaren Informationszeichen angeordnet ist, um auch diese zu schützen.

Bei bevorzugten Ausführungsformen der Erfindung sind an der Rückseite der Basis Vorsprünge angeordnet. Mit Hilfe derartiger Vorsprünge lässt sich der in der Regel an der Rückseite der Basis angeordnete RFID-Chip schützen, der meist höher (dicker) ist als die Antenne, und die Vorsprünge ermöglichen ein Stapeln der In-Mould-Etiketten. Dies verdeutlicht das folgende Beispiel:

Je nach Layout ist der RFID-Chip (Modul) bei allen gefertigten In-Mould-Etiketten immer an der gleichen Stelle positioniert. Geht man davon aus, dass der RFID-Chip 0,25 mm über die Antenne hinausragt, würde bei einer Stapelmenge von 100 In-Mould-Etiketten die Position, an der sich der RFID-Chip befindet, um 25 mm auftragen. Insoweit wäre dann eine Magazinierung (z.B. bei einem automatischen Entnahmesystem mit Saugern) nicht mehr möglich. Dieses Auftragen könnte auch dazu führen, dass die sich im Stapel befindlichen RFID-Chips beschädigt werden.

Wenn nun die Höhe der Vorsprünge mindestens so groß ist wie die in bezug auf die Rückseite der Basis vorspringende Dicke des RFID-Chips, lässt sich eine große Zahl von In-Mould-Etiketten übereinander stapeln, ohne dass es zu einem "Auftragen" kommt und ohne dass der RFID-Chip in Mitleidenschaft gezogen wird. Vorzugsweise sind vier gleichhohe Vorsprünge in den Eckzonen der Basis vorgesehen.

Die Vorsprünge können Zusatzmaterial in bezug auf die Basis aufweisen, vorzugsweise ein Schaumstoffmaterial, das sich z.B. in Tropfenform auf die Rückseite der Basis aufbringen lässt und danach fest wird.

Bei einer anderen Möglichkeit sind die Vorsprünge einstückig mit der Basis ausgebildet. Dabei sind die Vorsprünge z.B. als Ausformungen in der Basis gestaltet. Da die Basis in der Regel ein hitzeverformbares Kunststoffmaterial aufweist, lassen sich solche Ausformungen z.B. durch Prägen unter erhöhter Temperatur in flaches Ausgangsmaterial einformen. Damit sich die Ausformungen übereinander gestapelter In-Mould-Etiketten nicht ineinanderlegen, wodurch der gewünschte Effekt verhindert würde, ist es sinnvoll, dass die Ausformungen verschiedener In-Mould-Etiketten unterschiedliche Geometrien aufweisen und/oder in unterschiedlichen Positionen angeordnet sind. Ein Beispiel sind längliche Ausformungen, die bei zwei Typen von In-Mould-Etiketten in unterschiedlichen Richtungen verlaufen, wobei beim Stapeln immer ein In-Mould-Etikett des einen Typs über einem In-Mould-Etikett des anderen Typs zu liegen kommt. Die Ausformungen benachbarter In-Mould-Etiketten sind dann kreuzförmig zueinander ausgerichtet, so dass sie nicht ineinanderrutschen können. Beim Eingießen eines In-Mould-Etiketts (In-Mould-Prozess, siehe oben) werden die Ausformungen infolge einer temporären Materialerweichung wieder geglättet; sie sind am Endprodukt in der Regel nicht mehr erkennbar.

Beim Herstellen eines erfindungsgemäßen In-Mould-Etiketts kann die Antenne entweder vor dem Aufbringen auf die Rückseite der Basis oder danach mit dem RFID-Chip verbunden werden, was auch durch die Art der Verbindungstechnik (z.B. Löten bei höherer Temperatur oder Crimpen bei niedrigerer Temperatur) mitbestimmt wird. Vorteilhaft ist der Einsatz eines Roboters, der z.B. die Antenne auf die Rückseite der Basis auflegt. Vorzugsweise sind die Basen eine Anzahl herzustellender In-Mould-Etiketten zunächst miteinander verbunden oder auf einem gemeinsamen Träger angeordnet und werden erst in einem späteren Verfahrensschritt separiert.

Das erfindungsgemäße In-Mould-Etikett vereint also die Vorteile herkömmlicher In-Mould-Etiketten und der RFID-Technik, sorgt für eine sichere und auch platzsparende Befestigung eines RFID-Chips mit zugehöriger Antenne an einem Spritzgussteil, z.B. einem Transportbehälter aus Kunststoff, die auch harten Belastungen standhält, und lässt sich außerdem noch kostengünstig herstellen.

Im Folgenden wird die Erfindung anhand von Ausführungsbeispielen weiter erläutert. Die Zeichnungen zeigen in
- Figur 1: die Vorderseite eines erfindungsgemäßen In-Mould-Etiketts in Draufsicht,
- Figur 2: die Rückseite des In-Mould-Etiketts aus Figur 1 in Draufsicht,
- Figur 3: einen Querschnitt durch das In-Mould-Etikett gemäß den Figuren 1 und 2 entlang der in Figur 2 eingezeichneten Strecke S,
- Figur 4: eine Draufsicht auf die Rückseite einer zweiten Ausführungsform des erfindungsgemäßen In-Mould-Etiketts,
- Figur 5: eine Draufsicht auf die Rückseite einer weiteren Ausführungsform des erfindungsgemäßen In-Mould-Etiketts und
- Figur 6: einen Querschnitt durch das In-Mould-Etikett gemäß Figur 5 entlang der in Figur 5 eingezeichneten Strecke S'.

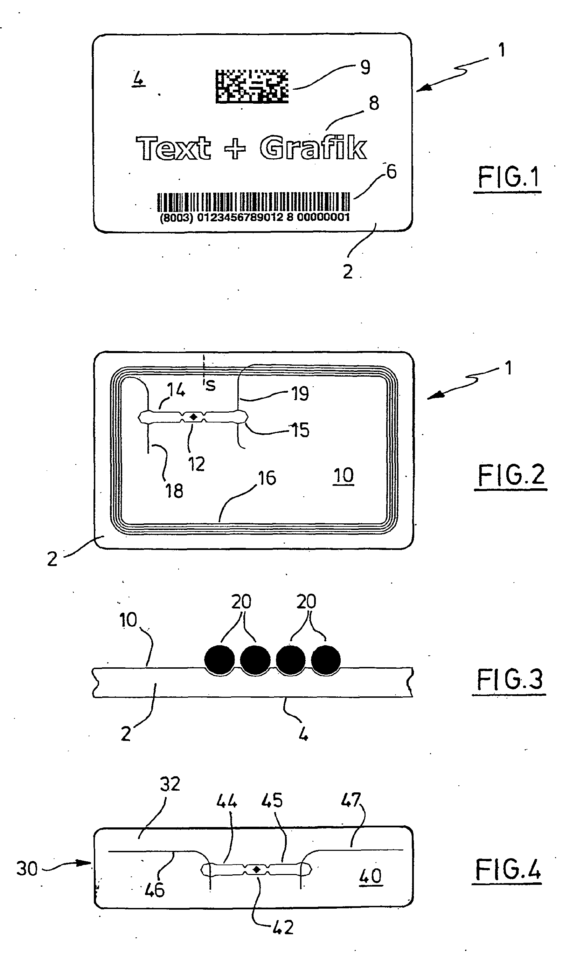

In den Figuren 1 bis 3 ist eine erste Ausführungsform eines In-Mould-Etiketts 1 dargestellt.

Das In-Mould-Etikett 1 weist eine Basis 2 auf, die im Ausführungsbeispiel aus einem Polyolefin gefertigt ist, z.B. einer Mischung aus Polyethylen und Polypropylen mit einem Füllstoff, der ein Silikat enthält. Die Basis 2 ist als Folie gestaltet, also relativ dünn.

Auf die Vorderseite 4 der Basis 2 sind ein Barcode 6, eine Beschriftung 8 und ein Logo 9 aufgedruckt. Ferner ist die Vorderseite 4 einschließlich des Aufdrucks mit einer in den Figuren nicht dargestellten transparenten Schutzschicht abgedeckt, die einen Schutz gegen Beschädigung, insbesondere des Aufdrucks, durch mechanische Einwirkung und UV-Strahlung bietet.

Soweit entspricht das In-Mould-Etikett 1 einem herkömmlichen In-Mould-Etikett.

Wie die Figur 2 zeigt, befindet sich auf der Rückseite 10 der Basis 2 des In-Mould-Etiketts 1 ein RFID-Chip 12 mit zwei Anschlüssen 14 und 15. Der RFID-Chip 12 kann über eine Antenne 16 mit einem externen Schreib- und Lesegerät kommunizieren, um Information (Datenbits) in den RFID-Chip 12 einzuschreiben oder daraus auszulesen. Die Antenne 16 ist im Ausführungsbeispiel als Spule mit generell fünf Windungen gestaltet, in der bei Änderungen des magnetischen Flusses ein Spannungssignal induziert wird. Im Ausführungsbeispiel besteht die Antenne 16 aus einem dünnen Kupferdraht, der mit einem Isolierlack beschichtet ist.

Die Antenne 16 hat zwei Endbereiche 18 und 19, die im Ausführungsbeispiel an die Anschlüssen 14 bzw. 15 des RFID-Chips 12 angelötet sind.

In Figur 3 ist ein Querschnitt durch die Basis 2 und die mit 20 bezeichneten Windungen der Antenne 16 entlang der Strecke S aus Figur 2 dargestellt. In diesem Bereich hat die Antenne 16 nur vier nebeneinander liegende Windungen 20. Man erkennt, dass die Windungen 20 in Vertiefungen an der Rückseite 10 der Basis 2 liegen.

Im Ausführungsbeispiel werden die In-Mould-Etiketten 1 aus einer Bahn aus Kunststofffolie hergestellt, in der zunächst die Basen 2 einer Vielzahl von In-Mould-Etiketten 1 nebeneinander liegend angeordnet sind. Zuerst werden die Vorderseiten 4 bedruckt, wobei der Barcode 6 für jedes einzelne In-Mould-Etikett 1 individuell eingeschrieben wird. Anschließend wird auf die Vorderseiten 4 die Schutzschicht aufgetragen.

In weiteren Herstellungsschritten wird auf die Rückseite 10 der Basis 2 jedes der In-Mould-Etiketten 1 eine Antenne 16 aufgelegt und gegen die Basis 2 gedrückt, wobei die Basis 2 gleichzeitig im Bereich der Antenne 16 durch Ultraschall erwärmt wird. Dies führt zu einem Aufschmelzen der Windungen 20 der Antenne 16 und zur Bildung der in Figur 3 dargestellten Vertiefungen in der Basis 2.

Anschließend wird für jedes In-Mould-Etikett 1 mit Hilfe eines Roboters ein RFID-Chip 12 auf die Rückseite 10 der Basis 2 aufgelegt und mit seinen Anschlüssen 14 und 15 mit den Endbereichen 18 bzw. 19 der Antenne 16 verlötet. Bis zum Schmelzen des Lötmittels werden die Anschlüsse 14 und 15 nur kurzzeitig erwärmt, was im Ausführungsbeispiel zu einem an sich entbehrlichen Anhaften der Anschlüsse 14 und 15 an der Basis 2 führt, aber zu keiner Schädigung der Basis 2.

Bevor die einzelnen In-Mould-Etiketten 1 voneinander separiert werden, ist es vorteilhaft, in einem kontinuierlichen Prozess den jeweiligen Barcode 6 auszulesen und in den zugeordneten RFID-Chip 12 einzuschreiben.

Die voneinander separierten In-Mould-Etiketten 1 können nun in herkömmlicher Weise beim Spritzgießen eines Spritzgussteils in das Kunststoffmaterial des Spritzgussteils eingebettet werden, wie eingangs erläutert. Dabei wird die Rückseite 10 der Basis 2 mit dem RFID-Chip 12 und der Antenne 16 von dem Kunststoffmaterial überdeckt und geschützt.

In Figur 4 ist eine weitere Ausführungsform eines In-Mould-Etiketts 30 mit einer Basis 32 von der Rückseite 40 her gezeigt. Auf die Rückseite 40 ist ein RFID-Chip 42 mit zwei Anschlüssen 44 und 45 aufgebracht. An die Anschlüsse 44 und 45 sind zwei Teilstücke 46 bzw. 47 einer Antenne angelötet, die als Dipolantenne gestaltet ist und zeitliche Änderungen elektrischer Felder auffangen kann.

Das In-Mould-Etikett 30 hat eine andere Form als das In-Mould-Etikett 1. Die Fertigung erfolgt ähnlich wie bei dem In-Mould-Etikett 1. Gleiches gilt für die Anwendungsmöglichkeiten.

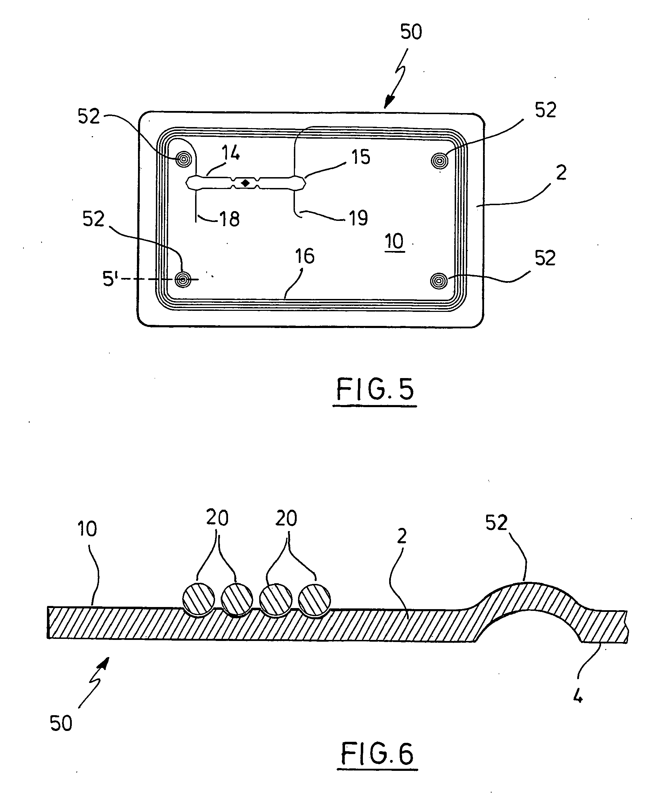

Die Ausführungsform eines In-Mould-Etiketts 50 gemäß den Figuren 5 und 6 ist ähnlich aufgebaut wie die erste Ausführungsform (Figuren 1 bis 3), weshalb hier für einander entsprechende Teile dieselben Bezugszeichen wie in den Figuren 1 bis 3 verwendet werden.

Im Unterschied zu der ersten Ausführungform ist die Rückseite 10 der Basis 2 in den vier Eckbereichen jeweils mit einer Ausformung 52 versehen, die einen Vorsprung bildet, der an der Rückseite 10 höher vorsteht als die Windungen 20 der Antenne 16 und als der RFID-Chip 12. Im Ausführungsbeispiel sind alle vier Ausformungen 52 gleich hoch.

In diesem Beispiel gehen die Ausformungen 52 von einer kreisförmigen Grundfläche aus. Damit man eine Anzahl derartiger In-Mould-Etiketten 50 übereinander stapeln kann, ohne dass sich benachbarte Ausformungen 52 ineinander legen, sind zwei Typen von In-Mould-Etiketten 50 vorgesehen, bei den sich die Ausformungen 52 an unterschiedlichen Positionen befinden (z.B. in unterschiedlichen Entfernungen zu den Ecken der jeweiligen Basis 2). In diesem Fall lassen sich zwei In-Mould-Etiketten 50 verschiedenen Typs jeweils direkt übereinander anordnen, ohne dass dabei die Ausnehmungen 52 ihre Funktion als Abstandshalter verlieren.

Wie die Ausformungen 52 erstellt werden können, wurde weiter oben bereits erläutert.

## Patentansprüche

1. In-Mould-Etikett mit einer Basis (2; 32), die eine Vorderseite (4) und eine Rückseite (10; 40) aufweist, **dadurch gekennzeichnet, dass** auf die Rückseite (10; 40) der Basis (2; 32) eine Antenne (16; 46, 47) aus Draht aufgebracht ist, die elektrisch leitend mit einem RFID-Chip (12; 42) verbunden ist.

2. In-Mould-Etikett nach Anspruch 1, **dadurch gekennzeichnet, dass** die Antenne (16; 46, 47) auf eine der aus der folgenden Liste ausgewählten Arten auf die Rückseite (10; 40) der Basis (2; 32) aufgebracht ist: aufgeschmolzen, aufgeklebt, formschlüssig eingelegt.

3. In-Mould-Etikett nach Anspruch 1 oder 2, **dadurch gekennzeichnet, dass** die Antenne (16; 46, 47) auf eine der aus der folgenden Liste ausgewählten Arten mit dem RFID-Chip (12; 42) verbunden ist: angelötet, angecrimpt.

4. In-Mould-Etikett nach einem der Ansprüche 1 bis 3, **dadurch gekennzeichnet, dass** die Antenne (16; 46, 47) eine der aus der folgenden Liste ausgewählten Bauarten hat: Schlaufe, Spule (16), Dipol (46, 47).

5. In-Mould-Etikett nach einem der Ansprüche 1 bis 4, **dadurch gekennzeichnet, dass** die Basis (2; 32) als Platte oder als Folie gestaltet ist und vorzugsweise ein Polyolefin enthält.

6. In-Mould-Etikett nach einem der Ansprüche 1 bis 5, **dadurch gekennzeichnet, dass** die Basis (2; 32) an der Vorderseite (4) mit optisch lesbarer Information (6, 8, 9) versehen ist, die vorzugsweise einen Barcode (6) aufweist.

7. In-Mould-Etikett nach Anspruch 6, **dadurch gekennzeichnet, dass** zumindest ein Teil der Information an der Vorderseite (4) der Basis (2; 32) in dem RFID-Chip (12; 42) gespeichert ist.

8. In-Mould-Etikett nach einem der Ansprüche 1 bis 7, **dadurch gekennzeichnet, dass** die Vorderseite (4) der Basis (2; 32) mit einer Schutzschicht versehen ist, die vorzugsweise über optisch lesbaren Informationszeichen (6, 8, 9) angeordnet ist.

9. In-Mould-Etikett nach einem der Ansprüche 1 bis 8, **dadurch gekennzeichnet, dass** an der Rückseite (10) der Basis (2) Vorsprünge (52) angeordnet sind.

10. In-Mould-Etikett nach Anspruch 9, **dadurch gekennzeichnet, dass** die Höhe der Vorsprünge (52) mindestens so groß ist wie die in bezug auf die Rückseite (10) der Basis (2) vorspringende Dicke des RFID-Chips (12).

11. In-Mould-Etikett nach Anspruch 9 oder 10, **dadurch gekennzeichnet, dass** vier gleichhohe Vorsprünge (52) in den Eckzonen der Basis (2) vorgesehen sind.

12. In-Mould-Etikett nach einem der Ansprüche 9 bis 11, **dadurch gekennzeichnet, dass** die Vorsprünge Zusatzmaterial in bezug auf die Basis aufweisen, vorzugsweise ein Schaumstoffmaterial.

13. In-Mould-Etikett nach einem der Ansprüche 9 bis 11, **dadurch gekennzeichnet, dass** die Vorsprünge (52) einstückig mit der Basis (2) ausgebildet sind.

14. In-Mould-Etikett nach Anspruch 13, **dadurch gekennzeichnet, dass** die Vorsprünge (52) durch Ausformungen in der Basis (2) gebildet sind, wobei vorzugsweise die Ausformungen (52) verschiedener In-Mould-Etiketten (50) unterschiedliche Geometrien aufweisen und/oder in unterschiedlichen Positionen angeordnet sind.

15. Verfahren zum Herstellen eines In-Mould-Etiketts (1; 30; 50) nach einem der Ansprüche 1 bis 14, **dadurch gekennzeichnet, dass** in einem Verfahrensschritt eine Antenne (16; 46, 47) aus Draht auf die Rückseite (10; 40) der Basis (2; 32) aufgebracht wird.

16. Verfahren nach Anspruch 15, **dadurch gekennzeichnet, dass** die Antenne (16; 46, 47) auf die Rückseite (10; 40) der Basis (2; 32) aufgeschmolzen wird, vorzugsweise mittels Erwärmung durch Ultraschall.

17. Verfahren nach Anspruch 15 oder 16, **dadurch gekennzeichnet, dass** die Antenne (16; 46, 47) mit dem RFID-Chip (12; 42) verbunden wird, nachdem die Antenne (16; 46, 47) auf die Rückseite (10; 40) der Basis (2; 32) aufgebracht worden ist.

18. Verfahren nach Anspruch 15 oder 16, **dadurch gekennzeichnet, dass** die Antenne (16; 46, 47) mit dem RFID-Chip (12; 42) verbunden wird, bevor die Antenne (16; 46, 47) auf die Rückseite (10; 40) der Basis (2; 32) aufgebracht wird.

19. Verfahren nach einem der Ansprüche 15 bis 18, **dadurch gekennzeichnet, dass** die Antenne (16; 46, 47) mittels eines Roboters auf die Rückseite (10; 40) der Basis (2; 32) aufgebracht wird.

20. Verfahren nach einem der Ansprüche 15 bis 19, **dadurch gekennzeichnet, dass** die Basen (2; 32) einer Anzahl herzustellender In-Mould-Etiketten (1; 30; 50) zunächst miteinander verbunden sind oder auf einem gemeinsamen Träger angeordnet sind und in einem späteren Verfahrensschritt separiert werden.

21. Verwendung eines In-Mould-Etiketts (1; 30; 50) nach einem der Ansprüche 1 bis 14 als Informationsträger für einen Spritzguss-Transportbehälter aus Kunststoff.

22. Verwendung nach Anspruch 21, **dadurch gekennzeichnet, dass** das In-Mould-Etikett (1; 30; 50) mit nach außen exponierter Vorderseite (4) der Basis (2; 32) in eine Gussform für den Transportbehälter eingesetzt wird und die Rückseite der Basis (2; 32) mit Antenne (16; 46, 47) und RFID-Chip (12; 42) beim Spritzgießen des Transportbehälters mit Kunststoff hinterfüllt wird.
